Europäisches Patentamt

(19) European Patent Office

Office européen des brevets

(11) Numéro de publication: **0 307 840 B1**

# (12) FASCICULE DE BREVET EUROPEEN

(45) Date de publication de fascicule du brevet:
23.10.91

(21) Numéro de dépôt: **88114873.8**

(22) Date de dépôt: **12.09.88**

(51) Int. Cl.5: **B23C 5/22**

(54) **Fraise hélicoidale à cartouches porte-plaquettes interchangeables.**

(30) Priorité: **16.09.87 CH 3573/87**

(43) Date de publication de la demande:
**22.03.89 Bulletin 89/12**

(45) Mention de la délivrance du brevet:
**23.10.91 Bulletin 91/43**

(84) Etats contractants désignés:
**AT BE DE ES FR GB IT LU NL SE**

(56) Documents cités:
EP-A- 0 213 847     DE-A- 2 603 735
DE-U- 8 604 712     FR-A- 2 561 968
GB-A- 2 018 652     US-A- 2 484 314
US-A- 3 371 397

(73) Titulaire: **STELLRAM S.A.**
**Route de l'Etraz**
**CH-1260 Nyon, Vaud(CH)**

(72) Inventeur: **Jaquiery, Henri**
**3 bis, Route de Divonne**
**CH-1260 Nyon(CH)**

(74) Mandataire: **Micheli & Cie**
**Rue de Genève 122, Case Postale 61**
**CH-1226 Genève-Thonex(CH)**

Description

La présente invention se rapporte selon le préambule des revendications 1 et 3 à une fraise hélicoïdale à cartouches porte-plaquettes interchangeables utilisable notamment pour contourner, rainurer et surfacer-dresser, ainsi qu'aux cartouches porte-plaquettes pour cette fraise; voir par exemple DE-A 2603735.

Dans la gamme de fraises hélicoïdales à plaquettes amovibles, il existe actuellement sur le marché deux exécutions bien distinctes, à savoir les fraises hélicoïdales avec hélice à gauche, qui sont à angle de coupe axial négatif (s'il s'agit d'une fraise à coupe à droite), et les fraises hélicoïdales avec hélice à droite, donc à angle de coupe axial positif (s'il s'agit d'une fraise à coupe à droite).

Une fraise avec angle de coupe axial négatif (hélice à gauche) permet une coupe plus douce, sans vibrations, car elle est fortement appuyée contre la broche dont elle rattrape les jeux éventuels alors que la pièce usinée est appliquée sur la table de la fraiseuse. Par contre, notamment pour des opérations de rainurage, l'évacuation des copeaux est alors mal aisée en raison du sens de l'hélice à gauche ; en outre, un angle de coupe axial négatif exclut l'usinage de certains matériaux, tels qu'aciers fortement alliés, exotiques, métaux légers.

Une fraise avec angle de coupe axial positif (hélice à droite) tend à supprimer les inconvénients précités, mais a tendance à déstabiliser l'ensemble pièce/machine ; la pièce usinée est en quelque sorte aspirée, alors que les jeux dans la broche ne sont pas rattrapés.

Le but de cette invention consiste à fournir une fraise hélicoïdale à cartouches porte-plaquettes interchangeables qui présente simultanément les avantages des deux types d'exécution comme décrites ci-dessus, notamment avec une géométrie de coupe évolutive sans en présenter les inconvénients.

La fraise hélicoïdale, objet de l'invention et visant à atteindre le but précité, présente les caractéristiques énoncées dans la revendication 1.

Un autre objet de la présente invention consiste en une cartouche porte-plaquette utilisable sur la fraise hélicoïdale précitée et présente les caractéristiques définies dans la revendication 3.

Le dessin annexé illustre schématiquement et à titre d'exemple une forme d'exécution de la fraise hélicoïdale selon l'invention et de la cartouche porte-plaquettes.

La figure 1 est une vue générale de côté de la fraise.

La figure 2 est un détail partiellement en coupe illustrant la fixation d'une cartouche porte-plaquettes sur le corps de la fraise, et la figure 3 est une vue de ce même détail du dessus de ladite cartouche.

La figure 4 est une vue correspondant à celle de la figure 3, mais illustrant une variante de la cartouche porte-plaquette.

Les figures 5A, 5B et 5C illustrent différentes positions possibles des cartouches porte-plaquettes sur le corps de la fraise, et la figure 6 est une vue partielle de côté de la fraise avec une disposition en chevron des cartouches porte-plaquettes selon la figure 5C.

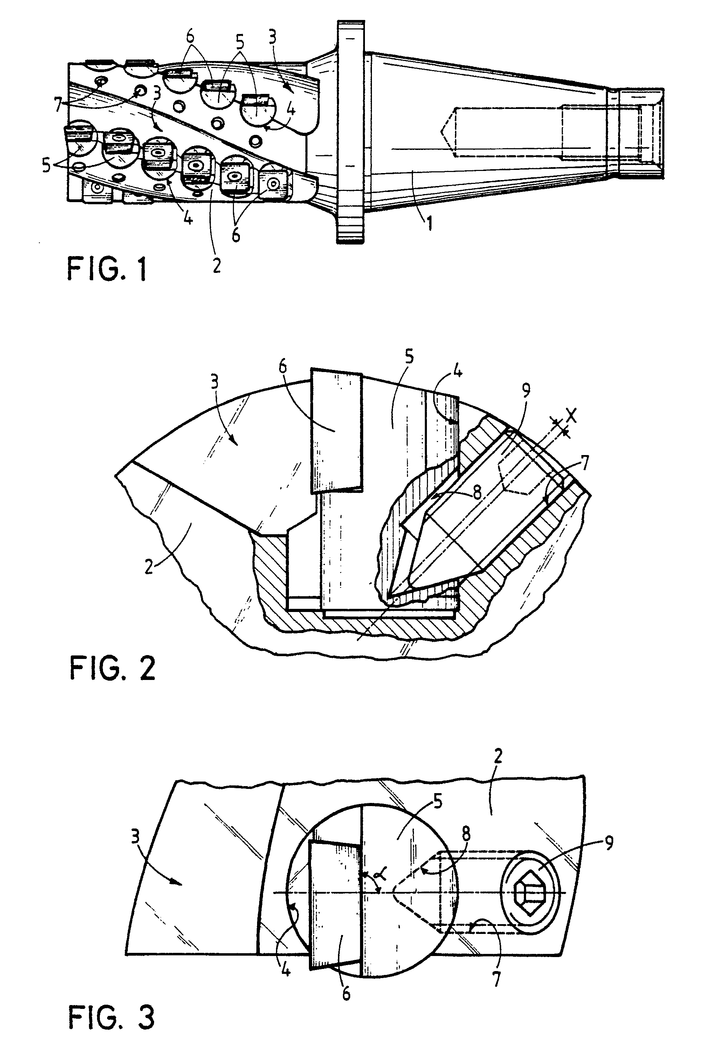

En référence tout d'abord à la figure 1, la fraise illustrée comporte un corps présentant une partie postérieure conique 1, destinée à être montée sur la broche d'une machine-outil (non montrée) et une partie antérieure ou tête 2 dans laquelle sont aménagées des goujures hélicoïdales 3.

Des logements cylindriques 4 sont pratiqués dans ces goujures, répartis le long de celles-ci, et disposés de telle sorte que leurs axes longitudinaux soient perpendiculaires à l'axe longitudinal de la fraise et situés dans des plans parallèles à celui-ci. Ces logements cylindriques 4 sont destinés à recevoir de façon amovible, en position de service, chacun une cartouche cylindrique 5 portant une plaquette de coupe 6, également fixée sur la cartouche de manière amovible et de manière connue en soi. De plus, des trous taraudés 7 sont également pratiqués dans les goujures 3 et sont destinés à coopérer avec des vis de blocage des cartouches, comme cela va être décrit ci-après.

La figure 2 montre comment la cartouche porte-plaquette 5 est fixée dans le logement cylindrique 4 de la tête 2 du corps de fraise. Un trou taraudé 7 est pratiqué selon un axe incliné (angle aigu) par rapport à l'axe du logement cylindrique 4. Chaque cartouche 5 présente une empreinte 8 dont le fond est conique et l'axe est parallèle à l'axe du trou taraudé 7, lorsque la cartouche 5 est dans le logement 4, ces deux axes étant radialement décalés d'une distance "X". Une vis-pointeau 9, dont la partie antérieure conique a la même forme que le fond conique de l'empreinte 8 de la cartouche 5 (ici un angle d'environ 60°) est vissée dans le trou taraudé 7, de telle sorte que sa pointe se place dans ladite empreinte 8. On peut ainsi bloquer la cartouche 5 dans le fond du logement cylindrique 4 et obtenir pour cette cartouche une orientation toujours et automatiquement dans la même position. La pression de la vis de fixation 9 agit en outre dans le même sens que les efforts de coupe.

De plus, le décalage parallèle des axes respectivement de la vis-pointeau de blocage 9 et de l'empreinte à fond conique 8 de la cartouche 5 permet non seulement de rattraper le jeu entre ladite vis et le taraudage du trou correspondant 7, mais également d'agir efficacement comme "frein" au moment du blocage de cette vis 9 (flexion de la vis - pincements des filets) afin d'empêcher celle-ci de se dévisser par la suite lors du fonctionnement de la fraise.

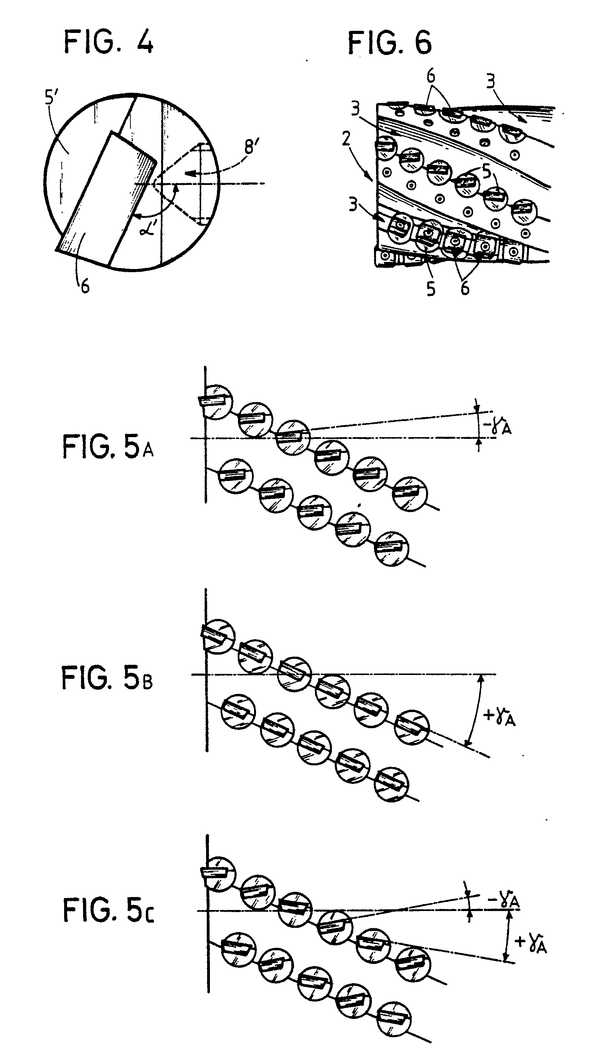

Comme on peut le constater sur les figures 3 et 4, plusieurs types de cartouches porte-plaquettes 5 sont prévus pour la fraise selon l'invention, permettant de changer la géométrie de coupe en fonction par exemple de la matière ou de la configuration des pièces à usiner, ou bien encore de la nature des travaux d'usinage à effectuer.

Sur la cartouche 5 illustrée sur les figures 2 et 3, l'empreinte à fond conique 8, destinée à coopérer avec la pointe de la vis de blocage 9, est aménagée de manière à ce que son axe soit perpendiculaire à la base de la plaquette de coupe 6 fixée, de façon amovible, sur ladite cartouche ($\alpha$ = 90°). Par contre, dans la réalisation de la figure 4, l'angle $\alpha'$ entre l'axe de l'empreinte 8' et la base de la plaquette 6 de la cartouche 5' est différent de 90°.

Comme on peut le constater sur la figure 1, les cartouches porte-plaquettes 5 sont disposées sur la tête 2 du corps de fraise selon un angle de coupe axial nul dans des goujures présentant un angle d'hélice à droite prononcé, pour faciliter l'évacuation des copeaux si la fraise travaille en pleine matière.

La particularité essentielle de la fraise selon l'invention consiste donc en ce que, sur le même corps de fraise, on peut, suivant la matière à usiner ou la configuration de la pièce, modifier la géométrie de coupe (angle axial et radial), ceci grâce à la possibilité de disposer de séries de cartouches 5 dans lesquelles l'angle entre l'axe de l'empreinte 8, 8' et la base de la plaquette de coupe 6 est différent (voir à titre d'exemples figures 3 et 4).

Un certain nombre de possibilités sont schématisées sur les figures 5A, 5B et 5C, montrant comment la géométrie de coupe peut être choisie en fonction du but recherché et des conditions d'usinage.

Par exemple, comme illustré sur la figure 5A, on équipera le corps de la fraise avec des cartouches avec angle de coupe axial négatif s'il faut rattraper les jeux de la broche qui par conséquent sera moins sollicitée (angle de coupe axial $\gamma_A$ = -1 à -18°).

Dans d'autres cas, pour des matériaux difficiles à usiner, par exemple des aciers fortement alliés, inconel, titane, métaux légers, où un bon cisaillement des copeaux est nécessaire pour éviter que la matière se soude sur l'arête de la plaquette amovible, on équipera le même corps, comme montré sur la figure 5B, avec des cartouches avec un angle de coupe axial fortement positif ($\gamma_A$ = +1 à +30°).

L'inconvénient d'un tel angle axial positif est que la pièce à usiner aura tendance à être aspirée hors de la table ou du montage qui la fixe, et celle-ci devra être maintenue avec toute la sécurité nécessaire ; c'est plus particulièrement dans ce cas que l'avantage du système de fixation décrit dans cette invention est important pour remédier à cet inconvénient.

Enfin, ce qui est encore plus remarquable avec cette fraise selon l'invention, c'est la possibilité de monter des cartouches pour obtenir une denture du type "chevron" comme illustré sur les figures 5C et 6, c'est-à-dire que sur une même rangée de dents on monte alternativement une cartouche à angle de coupe axial positif et une à angle de coupe axial négatif et ainsi de suite. Sur la rangée de dents qui suit, on monte le contraire, d'abord une cartouche à angle de coupe axial négatif ($\gamma_A$ = -1 à -18°), puis positif ($\gamma_A$ = +1 à +30°).

La répartition alternée des cartouches donne radialement une division inégale des dents. Cette géométrie, type chevron, annule les efforts axiaux. Elle permet de résoudre la plupart des usinages dans un grand nombre de matériaux. Elle supprime les vibrations, sur des pièces instables par leurs structures, ou lorsque la broche présente un grand porte à faux, ou si la stabilité de la machine, pièce et fixation sont défavorables.

## Revendications

1. Fraise hélicoïdale à cartouches porte-plaquettes (5) interchangeables comportant un corps dans la tête (2) duquel des logements cylindriques (4) sont aménagés pour recevoir de façon amovible les cartouches porte-plaquettes et dont l'axe longitudinal est situé perpendiculairement à l'axe longitudinal de la fraise et dans des plans parallèles à cet axe, lesdites cartouches porte-plaquettes ayant une section cylindrique correspondant à celle des logements, caractérisée par le fait que lesdits logements cylindriques sont pratiqués dans des goujures hélicoïdales que présente la tête du corps de fraise, par le fait que lesdites cartouches porte-plaquettes sont montées selon une disposition en chevrons, ces cartouches étant disposées dans une même goujure alternativement avec un angle de coupe axial négatif et avec un angle de coupe axial positif, par le fait qu'elle comporte des moyens de fixation des cartouches porte-plaquettes dans les logements correspondants agissant dans le même sens que les efforts de coupe et de manière à ce que ces cartouches soient toujours et automatiquement bloquées dans la même position, lesdits moyens de fixation comportant un trou taraudé (7) pratiqué dans la tête du corps de fraise selon un axe incliné par rapport à l'axe d'un logement cylindrique dans lequel il débouche, ainsi qu'une vis de fixation (9) destinée à être vissée dans le trou taraudé et dont l'extrémité antérieure est conique et coopère avec une empreinte (8) de forme correspondante que présente la cartouche porte-plaquette, et l'axe de la vis de fixation respectivement du trou taraudé et l'axe de l'empreinte aménagés dans la cartouche porte-plaquette étant parallèles mais décalés (X) l'un par rapport à l'autre.

2. Fraise selon la revendication 1, caractérisée par le fait que l'angle de coupe axial négatif est de -1 à -18° et que l'angle de coupe axial positif est de +1 à +30°.

3. Cartouche (5) porte-plaquette pour fraise hélicoïdale selon la revendication 1 et comportant un corps cylindrique sur lequel est fixé de façon amovible une plaquette de coupe (6), caractérisée par le fait qu'elle présente une empreinte conique (8) dont l'axe fait un angle aigu avec l'axe longitudinal de la cartouche.

**Claims**

1. Helicoidal milling cutter with indexable inserts-holding cartridges comprising a body whose head (2) presents cylindrical housings (4) intended to receive in a removable manner the inserts-holding cartridges and whose longitudinal axis is located perpendicularly to the longitudinal axis of the milling cutter and in plans parallel to said axis, said inserts-holding cartridges having a cylindrical cross-section corresponding to that of the housings, characterized by the fact that said cylindrical housings are provided in helicoidal indentations of the head of the milling cutter body, by the fact that said inserts-holding cartridges are mounted according to a disposition in herring-bone pattern, these cartridges being disposed in a same indentation alternatively with a negative axial cutting angle and with a positive axial cutting angle, by the fact that it comprises fixing means of the inserts-holding cartridges into the corresponding housings acting in the same direction as the cutting stresses and in such a manner that these cartridges are always and automatically locked in the same position, said fixing means comprising a threaded hole (7) provided in the head of the milling cutter body along an axis which is inclined with regard to the axis of a cylindrical housing in which it emerges, as well as a fixing screw (9) intended to be screwed into the threaded hole and whose fore end is conical and cooperates with a recess (8) of a corresponding shape in the inserts-holding cartridges, and the axis of the fixing screw, respectivelly of the threaded hole and the axis of the recess provided in the insert-holding cartridge being parallel but shifted the one with regard to the other.

2. Milling cutter according to claim 1, characterized by the fact that the negative axial cutting angle is of -1 to -18° and that the positive axial cutting angle is of +1 to +30°.

3. Insert-holding cartridge (5) for helicoidal milling cutter according to claim 1 and comprising a cylindrical body on which a cutting insert (6) is fixed in a removable manner, characterized by the fact that it has a conical recesss (8) whose axis makes an acute angle with the longitudinal axis of the cartridge.

**Patentansprüche**

1. Spiralfräser mit austauschbaren Plättchenträgereinsätzen (5), mit einem Körper, in dessen Kopf (2) zur Aufnahme der Einsätze auf lösbare Weise bestimmte zylindrische Aufnahmen (4) ausgebildet sind, deren Langsachse senkrecht zur Längsachse des Fräsers und in parallelen Ebenen zu dieser Achse liegt, wobei die Plättchenträgereinsätze einen zylindrischen Querschnitt entsprechend demjenigen der Aufnahmen haben, dadurch gekennzeichnet, daß die zylindrischen Aufnahmen in spiralförmigen Spannuten im Kopf des Fräserkörpers ausgebildet sind, daß die Plättchenträgereinsätze nach einer Zick-Zack-Anordnung angebracht sind, wobei die in derselben Spannut Vorgesehenen Einsätze abwechselnd mit einem negativen Axialschnittwinkel und mit einem positiven Axialschnittwinkel angeordnet sind, daß er Mittel zur Befestigung der Plättchenträgereinsätze in den entsprechenden Aufnahmen aufweist, die in derselben Richtung wie die Schneidbeanspruchungen und derart wirken, daß diese Einsätze immer und automatisch in derselben Position verriegelt sind, wobei die Befestigungsmittel eine im Kopf des Fräserkörpers eingearbeitete Gewindebohrung (7) mit einer zur Achse einer zylindrischen Aufnahme, in welche sie mündet, geneigten Achse sowie eine Befestigungsschraube (9) umfassen, die dazu bestimmt ist, in die Gewindebohrung eingeschraubt zu werden, und deren vorderes Ende konisch ist und mit einer Vertiefung (8) entsprechender Form des Plättchenträgereinsatzes zusammenwirkt, und daß die Achse der Befestigungsschraube entsprechend derjenigen der Gewindebohrung und die Achse der im Plättchenträgereinsatz ausgebildeten Vertiefung parallel, aber in bezug aufeinander versetzt (X) sind.

2. Fräser nach einem der Ansprüche 2 bis 4, dadurch gekennzeichnet, daß der negative Axialschnittwinkel von -1 bis -18° ist und daß der positive Axialschnittwinkel von +1 bis +30° beträgt.

3. Plättchenträgereinsatz (5) für einen Spiralfräser nach Anspruch 1, mit einem zylindrischen Körper, auf dem auf lösbare Weise ein Schneidplättchen (6) befestigt ist, dadurch gekennzeichnet, daß er eine konische Vertiefung (8) aufweist, deren Achse einen spitzen Winkel mit der Längsachse des Einsatzes bildet.

FIG. 1

FIG. 2

FIG. 3

# FIG. 4

# FIG. 6

# FIG. 5A

# FIG. 5B

# FIG. 5C